# Europäisches Patentamt
# European Patent Office
# Office européen des brevets

(11) Publication number: **0 082 672**
**B1**

(12) **EUROPEAN PATENT SPECIFICATION**

(45) Date of publication of patent specification: **11.12.85**

(51) Int. Cl.⁴: **C 09 D 11/00**

(21) Application number: **82306696.4**

(22) Date of filing: **15.12.82**

(54) Ink jet ink composition.

(30) Priority: **17.12.81 US 331603**

(43) Date of publication of application:
**29.06.83 Bulletin 83/26**

(45) Publication of the grant of the patent:
**11.12.85 Bulletin 85/50**

(84) Designated Contracting States:
**BE CH DE FR GB IT LI NL**

(56) References cited:
**EP-A-0 062 444
US-A-3 705 043
US-A-3 846 141**

**PATENTS ABSTRACTS OF JAPAN, vol. 6, no.
54(C-97)(932), 9th April 1982**

(73) Proprietor: **Exxon Research and Engineering
Company
P.O.Box 390 180 Park Avenue
Florham Park New Jersey 07932 (US)**

(72) Inventor: **Lin, An-Chung Robert
1, Patricia Lane
New Town Connecticut (US)**

(74) Representative: **Pitkin, Robert Wilfred et al
ESSO Engineering (Europe) Ltd. Patents &
Licences Apex Tower High Street
New Malden Surrey KT3 4DJ (GB)**

Courier Press, Leamington Spa, England.

## Description

This invention relates to an ink jet ink composition and more especially to a heterologous ink which features characteristics of both aqueously miscible and non-aqueously miscible fluids.

Ink jet inks are formulated to provide certain characteristics such as: good penetration into paper; good print quality; small dot size; good jetability, etc. Unfortunately, it is generally not possible to maximise more than one or two of these characteristics in any particular ink formulation.

Ink compositions usually represent a trade-off in certain characteristics in order to maximise other characteristics. This trade-off is clearly evident when choosing between different classes of inks, i.e. between aqueously miscible and non-aqueously miscible compositions.

For example, aqueously miscible inks generally provide a high surface tension characteristic for good jetability and small dot formation. Aqueously miscible inks, however, have the drawbacks of not penetrating well into paper, and having high evaporation rates.

On the other hand, non-aqueously miscible inks provide round dots for good print quality, and also have low evaporation rates. They have characteristic drawbacks of higher viscosity and lower surface tension, which characteristics reduce jetability and increase dot size, respectively.

U.S. Patent 3,994,736 proposes the use of polyhydric alcohols such as propylene glycol and ethylene glycol in the base liquid because of their ability to prevent the drying of the ink in the nozzle with subsequent clogging of the nozzle orifice. The polyhydric alcohols are mixed with a lower aliphatic monohydric alcohol to ensure rapid drying of the ink after deposition on the substrate to be printed.

The use of oleic acid is known in the typewriter ink art to provide good print quality, because it is easily absorbed into most printing papers.

Oleic acid may be used in inks for ink injection apparatuses, as disclosed in a Japanese Patent Application to General Corp., No. 132,548 filed 28-11-73, entitled: Ink Compositions for Ink Injection Type Recording Apparatus. This application, which was published in 1975, teaches formulating oleic acid with a high boiling point aromatic solvent optionally containing a nonionic surfactant, probably as a means to improve the print quality of jetability of the fluid. Aromatic hydrocarbons, however, are not preferred for use in ink jet inks because of their toxic, evaporative and carcinogenic properties.

The present invention has as an object to provide an improved formulation using oleic acid as a fluid medium for ink jet printing.

According to the present invention an ink composition for use in an ink jet apparatus is characterised in that it comprises in combination (a) a glycol selected from propylene glycol and polyethylene glycols having the formula $H(OCH_2CH_2)_nOH$, wherein n has a value of from 2 to 5, (b) oleic acid and (c) a hydroxy compound common solvent for components (a) and (b) selected from benzyl alcohol and methoxytriglycol.

An important advantage accruing from the invention is that a wider than normal variety of dyes or coloring agents can be employed, since they may be hydrophilic or hydrophobic.

One specific type of ink jet ink composition of the invention features a mixture of diethylene glycol and oleic acid in a common solvent comprising methoxy-triglycol.

The oleic acid is normally present in a weight percentage range of from 1 to 15, preferably 1 to 10.

The diethylene glycol is normally present in an approximate weight percentage range of from 25 to 50, preferably 30 to 45.

The methoxy-triglycol is normally present in an approximate weight percentage range of from 35 to 50, preferably 37 to 45.

The ink components employed in compositions according to our invention are homologized by choosing a solvent which has both a polar and a non-polar fraction or moiety, so that the molecule can be chemically compatible with either an aqueously miscible or non-aqueously miscible solute. Generally speaking, the solvent must provide these competing polar and non-polar fractions on opposite ends of the molecule, or at least sufficiently separated to avoid steric hinderances.

For mixtures of solutes of oleic acid and diethylene glycol, a methoxytriglycol solvent meets the above criterion. This solvent molecule has both polar and non-polar fractions which are sufficiently separated to allow incompatible solutes to find a chemically favorable environment. The hydroxy—and methoxy— fractions are sufficiently separated upon the solvent molecule to allow chemical affinities with both solutes.

Another ink system meeting the above criterion, contains propylene glycol and oleic acid in a solvent of benzyl alcohol.

Examples of suitable dyes and coloring agents for use in the composition of the invention are Pontamine Black (Du Pont and/or Mobay); the Orasol series (Ciba-Geigy); the Luxol series (Du Pont); and Pylam products (Pylam).

Table I below contains details of various ink compositions in accordance with the invention which combine good jetability with good print quality.

TABLE I

| | | | | |
|---|---|---|---|---|
| Propylene Glycol | | 50 | 25 | 70 |
| Benzyl Alcohol | | 25 | 50 | 8 |
| Oleic Acid | | 5 | 5 | 2 |
| Pontamine Black | | 20 | 20 | 20 |
| Surface Tension at | 24°C (76°F) | 36.0 | 37.0 | 34.5 |
| (mN/m) at | 57°C (135°F) | 34.7 | 35.3 | 33.5 |
| Viscosity | 24°C (76°F) | 22.5 | 13.0 | 31.4 |
| ($10^{-3}$ Pa.s) | 57°C (135°F) | 8.3 | 6.0 | 10.0 |
| Resistivity (ohms/cm) | | 380 | 400 | 318 |
| Specific gravity (g/cm$^3$) | | 1.0315 | — | — |

In the system utilizing oleic acid and diethylene glycol in a methoxy-triglycol solvent, good jetability and good print quality is obtained by the compositions listed in Table II below:

TABLE II

| | | 1 | 2 | 3 | 4 | 5 | 6 | 7 | 8 | 9 | 10 |
|---|---|---|---|---|---|---|---|---|---|---|---|
| Oleic Acid | | 10 | 5 | 1 | 5 | 10 | 5 | 1 | 10 | 10 | 10 |
| Diethylene Glycol | | 37.5 | 40 | 42 | 45 | 37.5 | 40 | 42 | 38 | 30 | 37 |
| Methoxytriglycol | | 37.5 | 40 | 42 | 35 | 37.5 | 40 | 42 | 38 | 45 | 37 |
| Orasol Black RU | | 10 | 10 | 10 | 10 | 10 | 10 | 10 | 11 | 7.5 | — |
| Orasol Black CN | | — | — | — | — | — | — | — | — | 7.5 | — |
| Orasol Brown 4 RUSN | | 5 | 5 | 5 | 5 | — | — | — | — | — | — |
| Orasol Brown GUS | | — | — | — | — | 5 | 5 | — | — | — | — |
| Luxol Fast Brown K | | — | — | — | — | — | — | 5 | 3 | — | — |
| Pylam 82/811 | | — | — | — | — | — | — | — | — | — | 16 |
| Surface Tension | 24°C (76°F) | 34.6 | 34.8 | 35.0 | 34.0 | 34.0 | 34.2 | 35.0 | 33.0 | — | — |
| (mN/m) | 57°C (135°F) | 32.2 | 34.0 | 34.5 | 33.1 | 32.0 | 33.5 | 33.5 | 31.5 | 31.5 | 32.5 |
| Viscosity | 24°C (76°F) | 40.7 | 47.6 | 34.7 | 36.1 | 55.5 | 47.1 | 43.9 | 43.4 | — | — |
| $(10^{-3}$ Pa.s) | 57°C (135°F) | 11.9 | 11.5 | 10.0 | 10.4 | 12.1 | 12.0 | 12.6 | 12.6 | 11.2 | 13.6 |

## 0 082 672

### Claims

1. An ink composition for use in an ink jet apparatus; characterised in that the composition comprises in combination (a) a glycol selected from propylene glycol and polyethylene glycols having the formula $H(OCH_2CH_2)_nOH$, where n has a value of from 2 to 5, (b) oleic acid and (c) a hydroxy compound common solvent for components (a) and (b) selected from benzyl alcohol and methoxytriglycol.

2. An ink composition as claimed in claim 1, comprising propylene glycol, oleic acid and benzyl alcohol.

3. An ink composition as claimed in claim 1, wherein the polyethylene glycol is diethylene glycol.

4. An ink composition as claimed in claim 3, comprising diethylene glycol, oleic acid and methoxytriglycol.

5. An ink composition as claimed in claim 3, or claim 4, wherein the diethylene glycol is present in a weight percentage range from 30 to 45.

6. An ink composition as claimed in claim 1 or any of claims 3 to 5, wherein the methoxytriglycol is present in a weight percentage range of 37 to 45.

7. An ink composition as claimed in any preceding claim, wherein the oleic acid is present in a weight percentage range from 1 to 10.

8. An ink composition as claimed in any preceding claim, further containing at least one hydrophilic coloring agent or dye.

### Revendications

1. Composition d'encre destinée à servir dans un appareil à jets d'encre, caractérisée en ce que la composition comprend en combinaison (a) un glycol choisi parmi le propylène-glycol et des polyéthylène-glycols répondant à la formule $H(OCH_2CH_2)_nOH$, dans laquelle n vaut de 2 à 5, (b) l'acide oléique et (c) un solvant commun des composants (a) et (b) qui est un composé hydroxylé choisi parmi l'alcool benzylique et le méthoxy-triglycol.

2. Composition d'encre telle que revendiquée à la revendication 1, comprenant le propylène-glycol, l'acide oléique et l'alcool benzylique.

3. Composition d'encre telle que revendiquée à la revendication 1, dans laquelle le polyéthylène-glycol est le diéthylène-glycol.

4. Composition d'encre telle que revendiquée à la revendication 3, comprenant le diéthylène-glycol, l'acide oléique et le méthoxy-triglycol.

5. Composition d'encre telle que revendiquée à la revendication 3 ou à la revendication 4, dans laquelle le diéthylène-glycol est présent en un pourcentage pondéral de 30 à 45.

6. Composition d'encre telle que revendiquée à la revendication 1 ou dans l'une quelconque des revendications 3 à 5, dans laquelle le méthoxy-triglycol est présent en un pourcentage pondéral de 37 à 45.

7. Composition d'encre telle que revendiquée dans l'une quelconque des revendications précédentes, dans laquelle l'acide oléique est présent en un pourcentage pondéral de 1 à 10.

8. Composition d'encre telle que revendiquée dans l'une quelconque des revendications précédentes, contenant en outre au moins un agent colorant ou colorant hydrophile.

### Patentansprüche

1. Tintenzusammensetzung zur Verwendung in einem Tintenstrahlgerät, dadurch gekennzeichnet, daß sie in Kombination von (a) ein Glykol ausgewählt als Propylenglykol und Polyethylenglykolen mit der Formel $H(OCH)_2CH_2)_nOH$, in der n einen Wert von 2 bis 5 besitzt, (b) Ölsäure und (c) eine Hydroxyverbindung als gemeinsames Lösungsmittel für die Komponenten (a) und (b) ausgewählt aus Benzylalkohol und Methoxytriglycol enthält.

2. Tintenzusammensetzung nach Anspruch 1, dadurch gekennzeichnet, daß sie Propylenglykol, Ölsäure und Benzylalkohol enthält.

3. Tintenzusammensetzung nach Anspruch 1, dadurch gekennzeichnet, daß das Polyethylenglykol Diethylenglykol ist.

4. Tintenzusammensetzung nach Anspruch 3, dadurch gekennzeichnet, daß sie Diethylenglykol, Ölsäure und Methoxyglykol enthält.

5. Tintenzusammensetzung nach Anspruch oder 4, dadurch gekennzeichnet, daß das Diethylenglykol in einer Menge von 30 bis 45 Gew.% vorhanden ist.

6. Tintenzusammensetzung nach Anspruch 1 oder einem der Ansprüche 3 bis 5, dadurch gekennzeichnet, daß das Methoxytriglykol in einer Menge von 37 bis 45 Gew.% vorhanden ist.

7. Tintenzusammensetzung nach einem der vorangehenden Ansprüche, dadurch gekennzeichnet, daß die Ölsäure in einer Menge von 1 bis 10 Gew.% vorhanden ist.

8. Tintenzusammensetzung nach einem der vorangehenden Ansprüche, dadurch gekennzeichnet, daß sie zusätzlich zumindest ein hydrophiles Färbungsmittel oder einen Farbstoff enthält.